# FASCICULE DE BREVET EUROPEEN

(11) **EP 1 589 189 B1**
(45) Date de publication et mention de la délivrance du brevet: **02.09.2009**
(21) Numéro de dépôt: 05290893.6
(22) Date de dépôt: 22.04.2005
(51) Int. Cl.: F01D 5/06, F01D 25/24, F16B 39/28, F16L 23/036

(54) **Système de fixation de pièces par des goujons à collerettes**
Befestigungssystem für Gewindestiftverbindungen mit Auskragung
Attachment system for stud connections carrying projections

(30) Priorité: 23.04.2004 FR 0404313
(43) Date de publication de la demande: 26.10.2005
(73) Titulaire: SNECMA, 75015 Paris (FR)
(72) Inventeur: Maffre, Jean-Philippe Julien, 77190 Dammarie les Lys (FR)
(74) Mandataire: Barbin le Bourhis, Joël

(56) Documents cités:
- EP-A- 1 462 664
- DE-A- 19 627 386
- US-A- 5 215 335
- US-A- 5 226 788
- US-A1- 2003 118 399

## Description

L'invention concerne un système de fixation d'au moins deux pièces annulaires par une pluralité de goujons ayant des collerettes assurant l'antirotation.

L'invention s'applique notamment aux rotors de turbine comportant des flasques en amont et en aval eux-mêmes liés à des anneaux d'étanchéité à léchettes, mais elle peut s'appliquer à la liaison de deux pièces quelconques par bridage.

Les goujons sont des tiges métalliques servant à assembler deux pièces et dont les extrémités sont filetées. Ils sont habituellement fixés par l'une de leur extrémité dans l'une des pièces, traversent la seconde pièce de part en part et reçoivent à l'autre extrémité un écrou de serrage. Le document EP 1462664, non publiée à la date de dépôt de la présente demande, divulgue un goujon dont la partie centrale est destinée à coopérer avec une portion creuse d'un support de manière à éviter toute rotation du goujon lors du vissage d'éléments à ces extrémités. Cette solution nécessite une adaptation du support et n'est pas adaptée à la fixation d'une pluralité de goujons contigus. Ce document divulgue les caractéristiques du préambule de la revendication 1.

En aéronautique, les goujons traversent habituellement les deux pièces et reçoivent aux deux extrémités des écrous de serrage. Dans les rotors de turbine, les écrous de serrage sont difficilement accessibles, aussi est-il parfois nécessaire de monter et fixer fermement les goujons sur l'une des pièces avant de monter l'autre pièce. Ils permettent de constituer des ensembles modulaires assemblés qui facilitent les opérations de maintenance.

Dans ce cas, les goujons présentent dans leur zone médiane une collerette à contour non circulaire, qui loge dans une gorge ménagée dans la surface d'appui de l'une des deux pièces, et qui, lors du serrage de l'écrou sur cette pièce, vient appuyer sur une paroi axiale délimitant la gorge. Ainsi, tous les goujons sont d'abord fixés sur cette première pièce, et il ne reste plus qu'à positionner la deuxième pièce et serrer le deuxième jeu d'écrous de serrage.

La périphérie des collerettes est conformé pour présenter des méplats qui viennent appuyer sur la paroi de la première pièce lors du serrage des premiers écrous, empêchant ainsi la rotation des goujons. Il y a alors des risques d'endommager la première pièce, qui est une pièce structurelle coûteuse, alors que le goujon est un produit consommable. Ce risque se produit lors du premier montage de la turbine et également lors des opérations d'entretien ultérieures nécessitant le démontage du rotor.

En outre, la gorge d'implantation des collerettes est large, ce qui entraîne une souplesse très importante néfaste à la dynamique d'ensemble.

Le but de l'invention est de pallier ces inconvénients, et de proposer un nouveau système de fixation au moyen de goujons à collerette assurant l'antirotation dans lesquels les collerettes sont conformées pour ne pas prendre appui sur les pièces à assembler.

L'invention concerne donc un système de fixation d'au moins deux pièces, dont l'une comporte au moins une bride en appui sur une surface de l'autre pièce, au moyen d'une pluralité de goujons, un tel goujon comprenant deux extrémités filetées et présentant dans sa zone médiane une collerette à contour non circulaire logeant dans une gorge ménagée dans une surface d'appui de l'une desdites pièces, lesdites collerettes étant destinées à assurer l'antirotation desdits goujons.

Selon l'invention ce système est caractérisé par le fait que le contour de chaque collerette comporte deux surfaces planes sensiblement opposées qui servent de butée mutuelle assurant l'antirotation aux collerettes des goujons adjacents.

Dans le cas où les deux pièces sont sensiblement de révolution autour d'un axe, et les surfaces d'appui des pièces sont perpendiculaires audit axe, les surfaces planes des collerettes s'étendent dans des plans contenant ledit axe.

Le système s'applique notamment au cas où l'une des pièces est une roue de turbine et l'autre pièce est un flasque.

D'autres avantages et caractéristiques de l'invention ressortiront à la lecture de la description suivante faite à titre d'exemple et en référence aux dessins annexés dans lesquels :
la figure 1 montre en coupe la fixation de trois pièces de révolution par un système de fixation selon l'invention, cette coupe étant prise selon un plan contenant l'axe de révolution et l'axe d'un goujon,
la figure 2 est une vue de face de la pièce contenant la gorge logeant les collerettes des goujons,
la figure 3 est une vue en perspective d'un goujon conforme à l'invention, et
la figure 4 montre trois goujons adjacents dans une position de blocage mutuel.

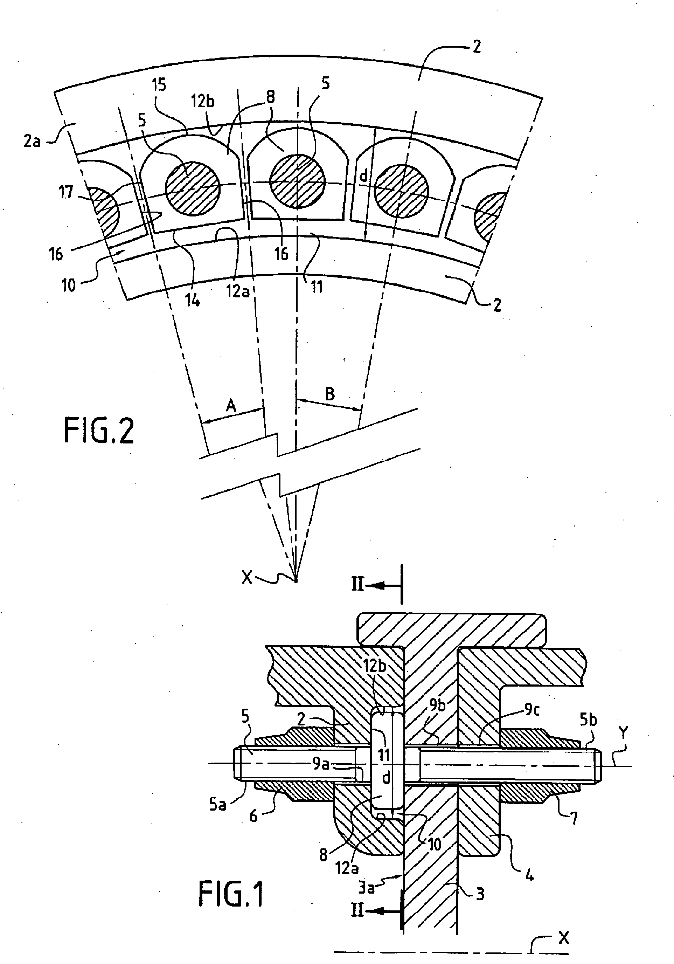

Les figures 1 et 2 montrent le système de fixation de trois pièces sensiblement de révolution autour d'un axe X, qui peuvent être par exemple, une bride 2 d'une roue de turbine, une bride 3 d'un palier de support, et un flasque 4 portant un dispositif d'étanchéité à labyrinthe. Ce système est constitué d'une pluralité de goujons 5 dont les extrémités 5a et 5b sont filetées afin de recevoir des écrous de serrage 6 et 7 et qui présentent dans leur zone médiane une collerette 8. Les goujons 5 sont régulièrement répartis autour de l'axe X et traversent des trous 9a, 9b et 9c ménagés en correspondance respectivement dans les pièces 2, 3 et 4.

Après le montage des goujons et leur serrage, les axes Y des goujons 5 sont parallèles à l'axe X. Les surfaces d'appui des pièces 2, 3 et 4 sont parallèles entre elles et s'étendent dans des plans perpendiculaires à l'axe X.

Dans l'exemple montré sur les figures 1 et 2, la pièce 2 présente sur sa face 2a en appui contre la face 3a de la pièce 3, une gorge annulaire 10 destinée à loger les collerettes 8 des goujons 5. Cette gorge 10 présente une section en U dans un plan radial contenant l'axe X et est délimitée par un fond 11 perpendiculaire à l'axe X, et deux parois cylindriques 12a et 12b d'axe X et écartées radialement d'une distance d. Les trous 9a débouchent dans le fond 11 sensiblement à mi-distance des parois cylindriques 12a et 12b.

Selon l'invention, le contour des collerettes 8 est défini de telle manière que lors du serrage de l'un quelconque des écrous de serrage 6, 7, les collerettes ne puissent venir appuyer contre les parois cylindriques 12a et 12b, mais se bloquent mutuellement pour assurer l'antirotation des goujons 5.

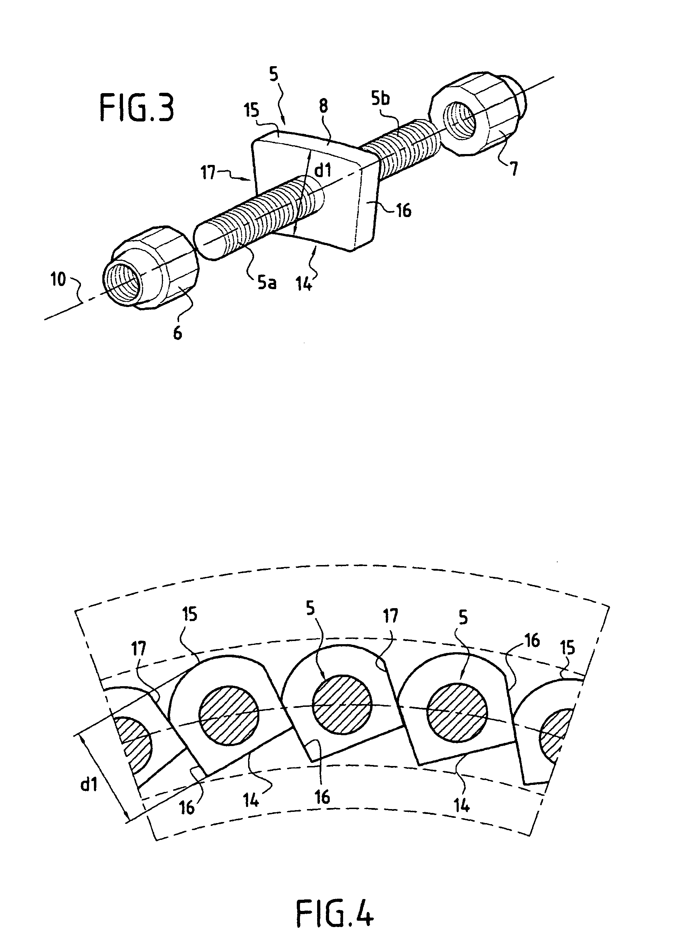

Ainsi que cela est montré sur la figure 3, chaque collerette 8 présente quatre faces, à savoir une face 14 radialement intérieure et une face 15 radialement extérieure, sensiblement cylindriques et écartées d'une distance d1 inférieure à la largeur d de la gorge 10, ainsi que deux faces latérales planes 16 et 17 qui forment entre elles un angle A sensiblement égal à l'écart angulaire B entre deux trous 9a adjacents ainsi que cela est montré sur la figure 2.

Pour monter les trois pièces 2, 3 et 4, on procède de la manière décrite ci-après. On fixe d'abord les goujons 5 sur la pièce 2, en disposant côte à côte les collerettes 8 dans la gorge 10. La face plane 16 d'une collerette 8 et la face 17 de la collerette voisine se trouvent ainsi dans un même plan radial contenant l'axe X, puis on procède à la mise en place et au serrage des écrous 6. Les faces planes voisines 16 et 17 de deux goujons adjacents viennent ainsi en appui l'une contre l'autre et immobilisent en rotation les goujons 5, après une légère rotation des collerettes 8 (comme cela est montré sur la figure 4) liée au jeu entre deux goujons. Cet appui plan entre les goujons, par leurs faces 16, 17 permet une bonne répartition des contraintes, ce qui augmente la durée de vie des goujons. On monte ensuite les pièces 3 et 4 sur les extrémités des goujons 5 qui émergent sur la face 2a de la pièce 2 et on procède à la mise en place et au serrage des écrous 7.

## Revendications

1. Système de fixation d'au moins deux pièces, dont l'une (2, 3) comporte au moins une bride en appui sur une surface de l'autre pièce, au moyen d'une pluralité de goujons (5), un tel goujon comprenant deux extrémités filetées et présentant dans sa zone médiane une collerette (8) à contour non circulaire logeant dans une gorge (10) ménagée dans une surface d'appui (2a) de l'une (2) desdites pièces, lesdites collerettes étant destinées à assurer l'antirotation desdits goujons (5),
**caractérisé par le fait que** le contour de chaque collerette (8) comporte deux surfaces planes (16, 17) sensiblement opposées qui servent de butée mutuelle assurant l'antirotation aux collerettes des goujons adjacents.

2. Système selon la revendication 1, **caractérisé par le fait que** les deux pièces (2, 3) sont sensiblement de révolution autour d'un axe (X), et les surfaces d'appui sont perpendiculaires audit axe (X).

3. Système selon la revendication 2, **caractérisé par le fait que** les surfaces planes (16, 17) des collerettes s'étendent dans des plans contenant ledit axe (X).

4. Système selon la revendication 3, **caractérisé par le fait que** l'angle (A) formé par les plans est sensiblement égal à l'écart angulaire (B) entre deux goujons (5) adjacents.

5. Système selon l'une des revendications 1 à 4, **caractérisé par le fait que** l'une des pièces est une roue de turbine et l'autre pièce est un flasque.

6. Système selon la revendication 1, **caractérisé en ce que** lesdites surfaces planes (16, 17) de deux goujons adjacents s'appliquent l'une contre l'autre en appui plan.

## Claims

1. A fastener system for fastening together at least two parts, one of which (2, 3) includes at least one flange that is caused to bear against a surface of the other part by means of a plurality of pins (5), such a pin comprising two threaded ends and presenting a middle collar (8) having a non-circular outline, said collar being received in a groove (10) formed in a bearing surface (2a) of one (2) of said parts, and being designed to prevent said pins (5) from turning,
the system being **characterized by** the fact that the outline of each collar (8) includes two substantially opposite plane surfaces (16, 17) that serve as mutual abutments preventing the collars of the adjacent pins from turning.

2. A system according to claim 1, **characterized by** the fact that the two parts (2, 3) are substantially circularly symmetrical about an axis (X), and the bearing surfaces are perpendicular to said axis (X).

3. A system according to claim 2, **characterized by** the fact that the plane surfaces (16, 17) of the collars extend in planes containing said axis (X).

4. A system according to claim 3, **characterized by** the fact that the angle (A) formed between the planes is substantially equal to the angular offset (B) between two adjacent pins (5).

5. A system according to any one of claims 1 to 4, **characterized by** the fact that one of the parts is a turbine wheel and the other part is a flange.

6. A system according to claim 1, **characterized in that** said plane surfaces (16, 17) of two adjacent pins press against each other in a bearing plane.

## Patentansprüche

1. System zur Befestigung von wenigstens zwei Teilen, von denen das eine (2, 3) wenigstens einen in Anlage an einer Fläche des anderen Teils befindlichen Flansch aufweist, mit Hilfe einer Vielzahl von Bolzen (5), wobei ein solcher Bolzen zwei mit Gewinde versehene Enden umfaßt und in seinem mittleren Bereich einen Kragen (8) mit nicht kreisförmiger Kontur aufweist, der in einer Nut (10) aufgenommen ist, welche in einer Anlagefläche (2a) von einem (2) der Teile ausgebildet ist, wobei die Kragen dazu bestimmt sind, die Verdrehsicherung der Bolzen (5) sicherzustellen, **dadurch gekennzeichnet, daß** die Kontur eines jeden Kragens (8) zwei im wesentlichen einander gegenüberliegende plane Flächen (16, 17) aufweist, die als gegenseitiger Anschlag dienen, der die Verdrehsicherung der benachbarten Bolzen gegenüber den Kragen sicherstellt.

2. System nach Anspruch 1, **dadurch gekennzeichnet, daß** die beiden Teile (2, 3) im wesentlichen rotationssymmetrisch um eine Achse (X) sind und daß die Anlageflächen senkrecht zu der Achse (X) verlaufen.

3. System nach Anspruch 2, **dadurch gekennzeichnet, daß** die planen Flächen (16, 17) der Kragen in die Achse (X) enthaltenden Ebenen erstrecken.

4. System nach Anspruch 3, **dadurch gekennzeichnet, daß** der durch die Ebenen gebildete Winkel (A) im wesentlichen gleich dem Winkelabstand (B) zwischen zwei benachbarten Bolzen (5) ist.

5. System nach einem der Ansprüche 1 bis 4, **dadurch gekennzeichnet, daß** das eine der Teile ein Turbinenrad und das andere Teil ein Flansch ist.

6. System nach Anspruch 1, **dadurch gekennzeichnet, daß** die planen Flächen (16, 17) von zwei benachbarten Bolzen in Plananlage aneinander liegen.
